# EUROPEAN PATENT APPLICATION

(11) **EP 4 563 464 A1**
(43) Date of publication of application: **04.06.2025**
(21) Application number: 24216151.1
(22) Date of filing: 28.11.2024
(51) Int. Cl.: B64C 1/14, B64C 1/06, B64C 29/00

(54) **AIR MOBILITY APPARATUS AND MOBILITY APPARATUS HAVING DOOR**

(30) Priority: 28.11.2023 KR 20230168355; 05.11.2024 KR 20240155079
(71) Applicant: Hyundai Motor Company, Seoul 06797 (KR); Kia Corporation, Seocho-gu Seoul 06797 (KR)
(72) Inventor: SONG, Won Ki, 18280 Hwaseong-si, Gyeonggi-do (KR)
(74) Representative: Isarpatent

(57) **Abstract**

An air mobility apparatus and mobility apparatus having a door. The air mobility apparatus includes a fuselage having a first cabin (130) and a second cabin (132); and a rear door (144) having an inner door (146) partitioning the first cabin and the second cabin, and an outer door (148) partitioning the second cabin and an external space, wherein the inner door and the outer door are independently opened and closed.

## Description

### TECHNICAL FIELD

The present disclosure relates to an air mobility apparatus and a mobility apparatus that have a door, and more specifically, to an air mobility apparatus and a mobility apparatus, which may restrict the movement of baggage to a passenger cabin and ensure the ease of loading and unloading and the convenience of boarding and alighting.

### BACKGROUND

Aircraft may provide rapid movement of people and baggage in dense urban areas, over short distances, and the like. For urban operation, aircraft may operate with low noise and eco-friendliness. Therefore, development of aircraft systems to meet the above requirements is being carried out in various ways. For example, aircraft using eco-friendly energy may adopt a powertrain system using electric batteries as an energy source.

Such an aircraft may be referred to as an advanced aerial mobility (AAM). For low-power operation, an AAM may accommodate a smaller number of people relative to other types of aircraft. An AAM may load luggage for various purposes together with passengers. For future commercialization, research on detailed components of an AAM related to stable powertrain architecture, flight safety, propulsion, and fuselage shape is actively being conducted. However, development related to a cabin inside a fuselage is relatively less advanced than the research on the above-described components. In some cases, doors used for passengers and baggage may be installed at the side of the fuselage are mainly being presented in the AAM field.

In some cases, among the baggage of passengers, small-volume or small-weight baggage may be stored in the passenger cabin of an AAM, but large-volume or large-weight baggage may be placed in a separate space from a passenger seating area, for example, a rear space of the passenger seating area, for safety during the flight. In some cases, baggage may move to the passenger area during the flight. This may cause unexpected harm to passengers. Furthermore, regulations related to the operation of aircraft require that baggage not move or drop to the passenger area. In some cases, since side doors are positioned to correspond to a passenger boarding area, passengers carrying baggage may undergo discomfort when carrying baggage to the rear of the passenger area in a narrow space.

### SUMMARY

The present disclosure describes an air mobility apparatus and a mobility apparatus, which can restrict the movement of baggage to a passenger cabin and ensure the ease of loading and unloading and the convenience of boarding and alighting.

According to one aspect of the subject matter described in this application, an air mobility apparatus includes a fuselage having a first cabin and a second cabin, and a rear door comprising (i) an inner door configured to partition the first cabin and the second cabin from each other and (ii) an outer door configured to partition the second cabin and an external space of the fuselage from each other, where the inner door and the outer door are configured to be independently opened and closed.

Implementations according to this aspect can include one or more of the following features. For example, a horizontal length of the inner door in a longitudinal direction of the fuselage can be less than a horizontal length of the outer door in the longitudinal direction. In some examples, the outer door can include a first interior panel and a second interior panel that have different heights from each other. For examples, the height of the first interior panel of the outer door can be less than the height of the second interior panel of the outer door.

In some implementations, the inner door can be configured to, based on the inner door being open, overlap the first interior panel of the outer door. In some examples, the second interior panel of the outer door can be configured to, based on the inner door being open, be flush with adjacent end portions of the inner door. In some implementations, the outer door can further include an exterior panel that is arranged along the first and second interior panels of the outer door and defines a continuous outline with a surface of the fuselage, where an outer surface of the second interior panel of the outer door and an outer surface of the inner door are flat.

In some implementations, the air mobility apparatus can include a hinge shaft that rotatably connects the inner door and the outer door to the fuselage, where the inner door and the outer door are configured to rotate about the hinge shaft. For instance, the hinge shaft can be joined to a predetermined structure provided at the second cabin. In some examples, the air mobility apparatus can include a frame disposed at sides of the inner door, and the hinge shaft is joined to the frame. In some examples, the air mobility apparatus can include a medium structure that connects the hinge shaft to the frame. For example, the medium structure can include a bracket. In some examples, the inner door and the outer door are hinge-joined to the hinge shaft at different positions of the hinge shaft.

In some implementations, the air mobility apparatus can further include a front partition portion disposed between the first cabin and a first side of the second cabin, the front partition portion having an opening, and a rear partition portion disposed at a second side of the second cabin, where the inner door is configured to open and close the opening, and an end portion of the outer door is configured to face the rear partition portion based on the outer door being closed. In some examples, the inner door can include a stopper disposed at an upper end portion facing the front partition portion. The front partition portion can include a partition panel that defines the opening, the partition panel having a first side configured to face the inner door based on the inner door being closed, and a first front bulkhead disposed at a second side of the partition panel. The first front bulkhead can include a locking part disposed in an area higher than the partition panel, the locking part being configured to be coupled to the stopper of the inner door based on the inner door being closed.

In some examples, the front partition portion can further include a second front bulkhead that faces the first front bulkhead, and a support interposed between the first front bulkhead and the second front bulkhead, where the locking part is disposed at the support.

In some implementations, the first cabin can be a passenger cabin, and the second cabin can be a baggage cabin.

According to another aspect, a mobility apparatus includes a mobility body having a first space area and a second space area, and a rear door comprising (i) an inner door configured to partition the first space area and the second space area from each other and (ii) an outer door configured to partition the second space area and an external space of the mobility body from each other, where the inner door and the outer door are configured to be independently opened and closed.

Implementations according to this aspect can include one or more of the following features and the features described above. For example, a horizontal length of the inner door in a longitudinal direction of the mobility body is less than a horizontal length of the outer door in the longitudinal direction. In some examples, the outer door can include a first interior panel and a second interior panel that have different heights from each other.

In some implementations, the mobility apparatus can include a hinge shaft that rotatably connects the inner door and the outer door to the mobility body, where the inner door and the outer door are configured to rotate about the hinge shaft.

### BRIEF DESCRIPTION OF THE DRAWINGS

FIG. 1 is a diagram schematically illustrating an example of modules of various types of mobility apparatus.
FIG. 2 is a diagram illustrating an example of an air mobility apparatus.
FIG. 3 is a diagram illustrating an example of an air mobility apparatus implementing a hovering mode.
FIG. 4 is a diagram illustrating an example of an upper portion of an air mobility apparatus that implements a hovering mode.
FIG. 5 is a diagram illustrating an example of an air mobility apparatus implementing a cruising mode.
FIG. 6 is a schematic diagram showing an example of modules of the air mobility apparatus.
FIG. 7 is a view showing an example of a door of the air mobility apparatus.
FIG. 8 is a view showing an example of an inner door and an outer door.
FIG. 9 is a view showing the inner door overlapping the outer door.
FIG. 10 is a view showing an example of a hinge shaft.
FIG. 11 is a view showing an example of hinge joining of the inner door and the outer door.
FIG. 12 is a cross-sectional view showing an example of a first interior panel of the outer door.
FIG. 13 is a cross-sectional view showing an example of a second interior panel of the outer door.
FIG. 14 is a view showing an example of a joining structure of the inner door and a front partition portion.
FIG. 15 is a view showing an example of a cross section related to the joining of the inner door and the front partition portion.

### DETAILED DESCRIPTION

Hereinafter, one or more implementations of the present disclosure will be described in detail with reference to the accompanying drawings so that those skilled in the art may easily implement the present disclosure. However, the present disclosure may be implemented in various different ways, and is not limited to the implementations described therein.

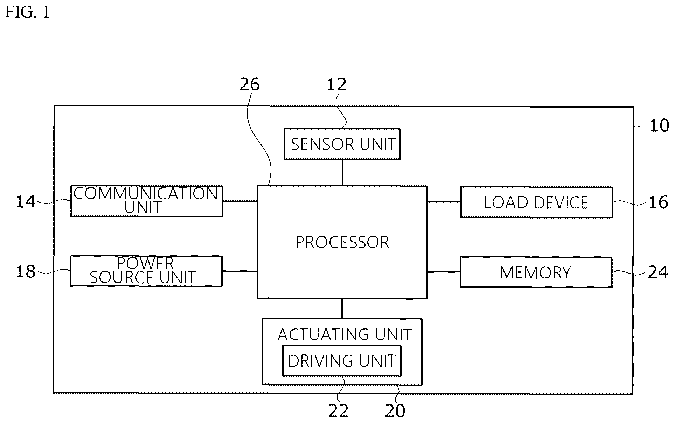

Hereinafter, FIG. 1 is a schematic diagram showing a module commonly configured in various types of mobile mobility devices.

The mobility apparatus 10 may be a moving body with mobility in the present disclosure. Mobility may involve moving from one point to a specific point while loading people, objects, and/or cargo for specific purposes. The mobility apparatus 10 may move for transportation and other purposes. Other purposes may include, for example, detecting or monitoring the environment around the mobility apparatus 10 by mounting an observation device. More specifically, the mobility apparatus 10 may be equipped with a camera to capture or analyze the surrounding environment and transmit the captured or analyzed image to a designated device. The mobility apparatus 10 may be used for various purposes beyond the aforementioned examples.

The mobility apparatus 10 may move through different spaces such as land, underground, air, space, sea, and/or underwater. Land or underground mobility devices 10 may be provided, for example, in the form of vehicles or robots. Air or space mobility devices 10 may be provided, for example, in the form of aircraft, such as fixed-wing or rotary-wing aircraft, AAM (Advanced Air Mobility) actively developed recently, unmanned aerial vehicles, drones, rockets, or vehicles mounted on satellites. Sea or underwater mobility devices 10 may include, for example, ships or submarines. The mobility apparatus 10 may move across multiple spaces without being limited to a specific space, such as amphibious vehicles or flying vehicles.

Furthermore, the mobility apparatus 10 may be moved manually, autonomously, or by a combination of these methods. Manual operation may be implemented by an operator or pilot using an interface, such as a control device provided in the mobility apparatus 10 or by remote control from a control center or an external control station. Autonomous control, that is, autonomous movement, may be performed by the independent processing of the mobility apparatus 10 or a combination of remote control through the control center and the cooperation between the mobility apparatus 10 and the control center.

In some examples, the mobility apparatus 10, which operates in various forms, may be designed differently depending on the use, movement space, driving method, control method, and other factors. However, from a comprehensive perspective of mobility, it may have common functional modules, as illustrated in FIG. 1. FIG. 1 describes the common functions in various types of mobility devices 10. Accordingly, unique functional modules utilized in each type are omitted, but the implementations of the present disclosure do not exclude the modules omitted in FIG. 1, nor are they excluded from the scope of the present disclosure.

The mobility apparatus 10 may include a sensor unit 12, a communication unit 14, and a load device 16.

The sensor unit 12 may be equipped with various types of detectors that detect the various states and situations occurring in the external and internal environments of the mobility apparatus 10. The sensor unit 12 includes a positioning sensor to identify the location information of the mobility apparatus 10. That is, the sensor unit 12 may include various heterogeneous sensors and acquire sensing data detected from each sensor. The sensor unit 12 may acquire sensor data used for movement control, status data detecting the state of modules constituting the mobility apparatus 10, situation data detecting the situation of passengers and/or cargo. The sensor unit 12 may provide the data to a processor 26 that triggers specific functions and actions. In the present disclosure, movement control may include at least one of the following: linear movement, turning, acceleration, deceleration, attitude control of the mobility apparatus 10, braking, and hovering. In the present disclosure, hovering may be control that generates thrust toward the downward or vertical direction relative to the mobility apparatus 10 to cause specific movements or movements of the mobility apparatus 10. The specific action or movement may include, for example, takeoff, landing, or substantial stationary flight within a limited range. The data from the sensor unit 12 described above is merely exemplary and may further include sensor data that detects various situations not enumerated here.

The communication unit 14 may support mutual communication with other devices to exchange data with external devices. Other devices may include, for example, a server controlling the mobility apparatus 10 or exchanging data related to the movement control of the mobility apparatus 10, ancillary devices supporting movement, and other mobility apparatuses. The server may be referred to by various terms, such as control device, management device, and control station. The communication unit 14 may transmit data generated or stored during movement to other devices and receive data and software modules transmitted from other devices. The protocol applied to the communication unit 14 may be determined according to the type of mobility apparatus 10, and the communication unit 14 may communicate with other vehicles or other devices based on cellular communication, WAVE (Wireless Access in Vehicular Environment) communication, DSRC (Dedicated Short Range Communication), near-field communication or on other communication methods. For example, the communication unit 14 may include an electric circuit implementing one or more of a transmitter, a receiver, and a transceiver that can communicate signals wirelessly or via wires. The aforementioned communication protocols and methods are merely exemplary and are not limited to these.

The load device 16 is installed on the mobility apparatus 10 and may be an auxiliary device that consumes power supplied from the power source unit 18 or converted from the output of the power source unit 18 by a command for use by the user or management of the load. The load device 16 in the present disclosure may be a type of non-mobility electrical device, excluding the mobility power system used in the driving unit 22. The load device 16 may include, for example, a display system, an air conditioning system, a lighting system, a seat system, and various devices installed in the mobility apparatus 10.

In some implementations, the mobility apparatus 10 may include an interface that receives requests for operations of the movement control and the load device 16. The interface may be implemented as a hardware device or a software interface. The hardware interface may be a hardware control device for movement operations by the user for the mobility apparatus 10, such as a control stick for aviation, a steering wheel for land vehicles, pedals for land vehicles, buttons, a rudder for marine vessels, etc., but is not limited to these. The software interface may be, for example, a touch-sensitive display, but is not limited to this.

The mobility apparatus 10 may also include a power source unit 18, an actuating unit 20, and a driving unit 22.

The power source unit 18 may generate and supply power and electricity used for the mobility power system, such as the driving unit 22, and for the load device 16. The mobility apparatus 10 may generate energy using at least one of various energy sources. When the mobility apparatus 10 is driven based on electric energy, the power source unit 18 may comprise, for example, an electric battery or a combination of an electric battery and a charging module that charges the battery. In some cases, where the power source unit 18 consists solely of an electric battery, the electric battery may be charged at a charging station or by another mobility device to supply power. When the power source unit 18 is a combination of an electric battery and a charging module, the charging module may employ at least one of a fuel cell and an engine based on fossil energy. The fuel cell may use substances such as hydrogen gas to produce electricity. In the case of an engine, the power source unit 18 may include a generator coupled with the engine, and the generator may convert mechanical energy generated by the engine into electrical energy to charge the electric battery.

In some examples, where the mobility apparatus 10 is driven based on fossil energy or nuclear fuel, the power source unit 18 may be configured with an internal combustion engine, turbine engine, or nuclear fuel-based engine. The mobility apparatus 10 may also have a hybrid-type power source unit 18 comprise an engine based on fossil energy and an electric battery. The hybrid-type power source unit 18 may charge the electric battery using the output of the engine generated during movement, and depending on the state of the mobility apparatus 10, the characteristics of the movement path, or the movement situation, it may select either the power from the engine or the electric battery to generate the driving force of the driving unit 22. In another example, the hybrid-type power source unit 18 may include an electric battery that can be charged by an external source and an engine. The processor 26 may switch between the engine power and the electric battery power depending on various situations and states to apply energy to the driving unit 22, thereby generating driving force.

The actuating unit 20 may include at least one module that implements movement operations. In some examples, where the mobility apparatus 10 is an air mobility apparatus, the actuating unit 20 may include mechanical and software components that perform at least one of the following operations: flight attitude control, hovering control related to takeoff and landing, altitude change control, and turning operation control. The flight attitude may relate to the roll, yaw, and pitch of the air mobility apparatus. In some examples, where the mobility apparatus 10 is a ground mobility device, the actuating unit 20 may include mechanical and software components that realize at least one of the following driving operations: longitudinal control such as acceleration and deceleration, lateral control such as steering. In the present disclosure, the actuating unit 20 may also be referred to as an actuator.

The actuating unit 20 may include the driving unit 22. The driving unit 22 is a module that implements external operations such as linear movement, turning, acceleration, deceleration, attitude control of the mobility apparatus 10, braking, and hovering. The driving unit 22 may be implemented in various forms depending on the type of mobility apparatus 10. In some examples, where the mobility apparatus 10 is an air mobility apparatus, the driving unit of the fixed-wing air mobility apparatus may be a turbine engine, flap installed on the main wing or tail wing and related to operations such as thrust and lift.

In another example, the fixed-wing air mobility apparatus may additionally include a propulsion assembly such as a propeller installed on a specific part of the main wing. The driving unit of a rotary-wing air mobility apparatus may include a rotor-type propulsion assembly and flaps, installed on the upper part of the fuselage and the tail wing. Depending on the specifications, air mobility apparatus may also include landing gear such as wheels for takeoff and landing, which may be housed within the fuselage during flight.

The driving unit 22 of an AAM-type air mobility apparatus may be equipped with a rotor-type propulsion assembly similarly to a rotary-wing air mobility. The propulsion assembly applied to the AAM-type air mobility apparatus may be fixed at least non-tiltable to the main wing, or may be installed at least tiltably to the main wing. In another example, the propulsion assembly applied to the AAM-type air mobility apparatus may be installed multiple times inside the main wing. Additionally, the driving unit of the AAM-type air mobility apparatus may be configured to rotate the wing to which the propulsion assembly is coupled within a certain angle range. Depending on the specifications, the driving unit of the AAM-type air mobility apparatus may be provided with wheels, such as landing gear, that are accommodated within the fuselage during flight and extended during takeoff and landing.

In some examples, where the AAM-type air mobility apparatus is driven based on electric energy, the driving unit 22 may include a motor and inverter that primarily rotate the propeller with electricity. In some examples, where the AAM-type air mobility apparatus is driven based on non-electric energy, such as fossil energy, the driving unit 22 may include modules that transmit the rotational power generated by the internal combustion engine to the propeller.

In some examples, where the mobility apparatus 10 is a ground mobility device, the driving unit 22 may include a plurality of wheels, a driving force transmission module for generating driving force and applying or transmitting driving force to the wheels, a braking module for decelerating the driving of the wheels, and a steering module for realizing lateral control of the wheels. The wheel, the driving force transmission modules, the braking modules, etc., may form a driving assembly, and driving assemblies may be provided depending on the number of wheels. In some examples, where the ground mobility device is driven based on electric energy, the driving force transmission module may comprise a motor module that generates driving force based on the electric power output from the electric battery. In some examples, where the ground mobility device is driven based on fossil energy, the driving force transmission module may include transmission and gear module that transmits power from the internal combustion engine.

In some examples, where the mobility apparatus 10 is a sea or underwater mobility device, the driving unit 22 may include a rudder, propulsion propeller, and modules that transmit power and specific motions to these components.

The mobility apparatus 10 may also include memory 24 and a processor 26.

The memory 24 stores applications and various data for controlling the mobility apparatus 10 and may load applications or read/write data in response to a request from the processor 26. Applications and data vary depending on the type and detailed specifications of the mobility apparatus 10 and may include sensor data related to movement control, state data related to the mobility device's movement control, data received from other devices, and data related to energy control between the power source unit 18 and the driving unit 22. Additionally, applications and data may include data related to modules responsible for functions other than control, software related to the operation of the mobility computing system, information and applications for autonomous movement, path information, and various information and control programs for user convenience.

In relation to the present disclosure, the processor 26 may use the applications, instructions, and data stored in the memory 24 to handle movement control, path control, energy control, control of the load device 16, autonomous movement control, and convenience functions. The processor 26 may also have different control processes depending on the type and detailed specifications of the mobility apparatus 10. The processor 26 may be implemented as a single processing module. Alternatively, the processing according to the above-mentioned matters may be distributed across multiple processing modules, and the processor 26 may collectively refer to multiple processing modules in the present disclosure. In some examples, the processor 26 may include an electric circuit, application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

Hereinafter, the air mobility apparatus will be described. Specifically, the present disclosure will primarily describe the AAM-type air mobility apparatus among various types of air mobility apparatuses. Although the AAM-type air mobility apparatus is described, the function, the modules and the apparatus described in the present disclosure may also be applied to other types of air mobility apparatuses if they are technically compatible. Broadly speaking, if the function, the modules and the apparatus described in the present disclosure are technically compatible, they may also be applied to ground, underground, space, sea, and underwater mobility devices.

The AAM-type air mobility apparatus may be classified into types such as VTOL (Vertical Take-off and Landing), STOL (Short Take-off and Landing), and CTOL (Conventional Take-off and Landing) according to the take-off and landing method. VTOL refers to an air mobility apparatus that can take off and land vertically without a runway, STOL refers to an air mobility apparatus that can take off and land on a relatively short runway or at low speed, and CTOL refers to an air mobility apparatus that requires a longer runway or higher speed than STOL for take-off and landing. Additionally, VTOL may be further classified into vectored thrust (or tilting rotor) type, lift-and-cruise type, and multicopter type according to the propulsion method. In the tilting rotor type, at least portion of plurality of propulsion assemblies may be tilted to be fully utilized for both hovering and cruising.

In the present disclosure, flight control according to the hovering mode may generate thrust in the downward or vertical direction relative to the fuselage of the air mobility apparatus, thereby causing a specific movement in the mobility apparatus 10. The specific movement may include, for example, takeoff, landing, or substantially stationary flight within a limited range. Flight control according to the cruising mode may relate to control related to forward flight or horizontal flight. In the lift-and-cruise type, the propulsion assemblies for hovering and cruising may be provided separately without tilting the rotors according to the flight mode. The multicopter type has multiple propulsion assemblies arranged horizontally relative to the fuselage similarly to a drone in that, and it can realize takeoff, landing, and cruising flight through attitude control of the fuselage.

In the present disclosure, a VTOL air mobility apparatus equipped with a motor-type propulsion assembly and a vectored thrust system is primarily described; however, the functions, modules, and devices of the air mobility apparatus described herein may also be applicable to other types of air mobility apparatus if they can be technically combined.

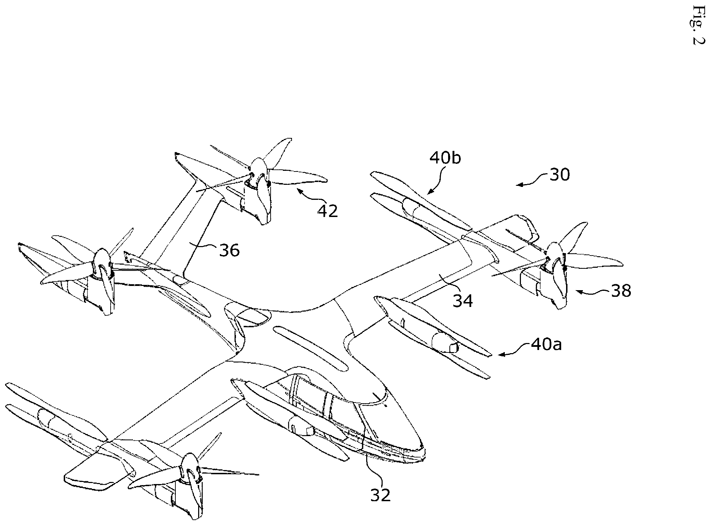

FIG. 2 is a diagram illustrating an example of an air mobility apparatus according to one example of the present disclosure.

The air mobility apparatus 30 of one example may include a streamlined fuselage 32, a main wing 34 arranged on the left and right sides of the central region of the fuselage 32, and a tail wing 36 arranged at the end region of the fuselage 32. The fuselage 32 may include, for example, a cabin for the pilot and passengers and space for loading cargo. The main wing 34 and the tail wing 36 may be configured as fixed wings.

The main wing 34 may have an inboard region and an outboard region. The main wing tilting propulsion assembly 38 with a tilting rotor may be arranged in the front region of the left and right outboard areas. The main wing non-tilting propulsion assemblies 40a and 40b, arranged horizontally relative to the fuselage 32, may be located in the inboard region and the rear region of the outboard areas, and may be referred to as lift propulsion assemblies. Additionally, the tail wing tilting propulsion assembly 42 with a tilting rotor may be arranged at the end of the tail wing.

Each of the propulsion assemblies described above may include a propeller with multiple blades, a hub to which the ends of each blade are connected, a motor that supplies rotational force to the shaft, an inverter that adjusts the power of the power source unit 18 based on flight conditions and motor specifications, and a propulsion assembly cooling module that cools the motor and inverter.

The main wing tilting propulsion assembly 38 and the tail wing tilting propulsion assembly 42 may include a nacelle that accommodates and covers the aforementioned components. The main wing tilting propulsion assembly 38 and the tail wing tilting propulsion assembly 42 may be fixed and may be tilted with respect to the boom by hinge coupling between nacelle and boom protruded from the outboard area of the main wing and the end of the tail wing. In the present disclosure, the propulsion assembly may also be referred to as a rotor, proprotor or propulsion assembly.

When the flight mode is a hovering mode, such as during takeoff and landing, the main wing and tail wing tilting propulsion assemblies 38 and 42 may be tilted by the hinge coupling so that the blade arrangement direction is substantially parallel to that of the main wing non-tilting propulsion assembly 40a. When the flight mode is a cruising mode, such as during horizontal flight, the main wing and tail wing tilting propulsion assemblies 38 and 42 may be tilted by the hinge coupling so that the blade arrangement direction is at a certain angle relative to that of the main wing non-tilting propulsion assemblies 40a and 40b. FIG. 2 illustrates an assembly for tilting, utilizing hinge coupling between the mount and nacelle. In another example, the tilting assembly may be implemented using a different mechanism that does not rely on hinge coupling. For example, a multi-joint linkage may connect respective predetermined point of the nacelle, which houses the modules of the tilting propulsion assemblies, and the mount, and then the nacelle and the mount may not have a physical coupling point between them. This would allow the main wing and tail wing tilting propulsion assemblies 38 and 42 to pivot substantially perpendicularly to the fuselage 32 during hovering mode as the multi-joint linkage extends. In cruising mode, the multi-joint linkage contracts, allowing the main wing and tail wing tilting propulsion assemblies 38 and 42 to pivot substantially parallel to the fuselage 32. The tilting of the main wing and tail wing tilting propulsion assemblies 38 and 42 may be synchronized according to the flight mode, and the tilting of each propulsion assembly may be adjusted differently according to attitude control and flight conditions within the same flight mode.

The main wing non-tilting propulsion assemblies 40a and 40b may be arranged at the ends of the boom extending from the front area of the inboard section and the rear area of the outboard section of the main wing 34. The main wing non-tilting propulsion assemblies 40a and 40b may be formed as dual propellers that overlap each other, or as a single propeller, as illustrated in FIG. 2. The main wing non-tilting propulsion assemblies 40a and 40b are primarily activated during hovering mode, but they may also be activated according to attitude control and flight conditions even during cruising mode. In the present disclosure, the non-tilting propulsion assemblies 40a and 40b may also be referred to as lift rotors or lift assemblies.

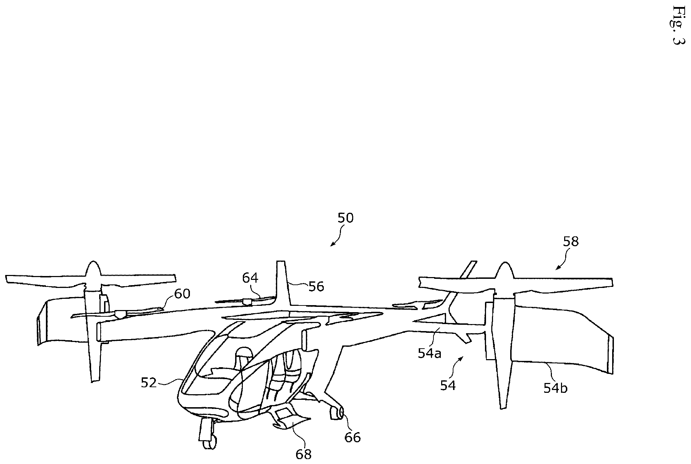

Although the present disclosure describes the tilting and non-tilting propulsion assemblies as being arranged as shown in FIG. 2, the arrangement of these propulsion assemblies is not limited to the example shown in FIG. 2 and the propulsion assemblies may be arranged in different locations. Furthermore, although FIG. 2 depicts four tilting propulsion assemblies and two non-tilting propulsion assemblies, the number of units is not limited to these, and the number may vary. Variations in the arrangement and number of tilting and non-tilting propulsion assemblies are illustrated in FIGS. 3 to 5, but other forms not mentioned in the present disclosure may also be designed.

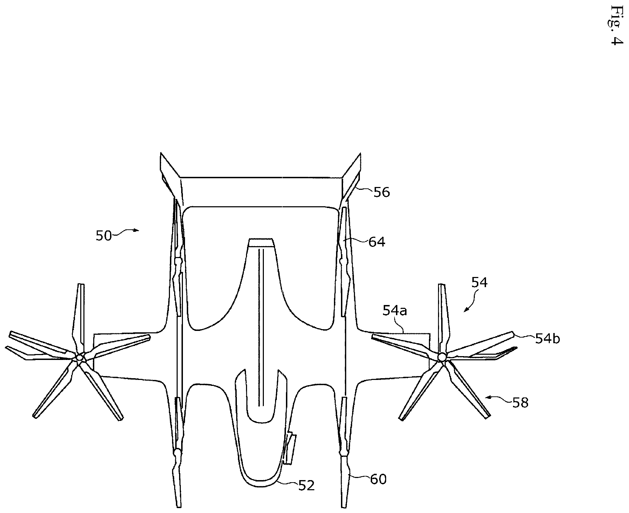

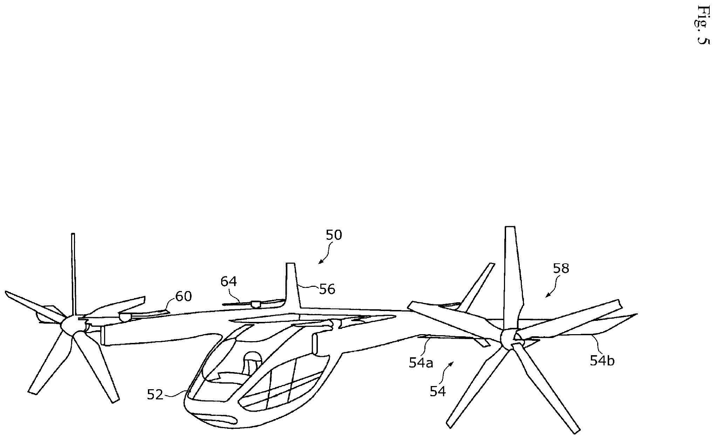

With reference to FIGS. 3 to 5, the aircraft (i.e. air mobility apparatus) will be described. FIG. 3 is a diagram illustrating an air mobility apparatus implementing a hovering mode. FIG. 4 is a diagram showing the upper part of the air mobility apparatus implementing the hovering mode. FIG. 5 is a diagram illustrating an air mobility apparatus implementing a cruising mode.

In some implementations, the air mobility apparatus, as shown in FIGS. 3 to 5, is substantially similar to the example in FIG. 2 except for the detailed configuration of the tilting propulsion assemblies. Therefore, the description of the same functions and components as in FIG. 2 is omitted, and the description will focus on the differences in the air mobility apparatus.

In some examples, the air mobility apparatus 50 may include a fuselage 52, a main wing 54 arranged on the left and right sides of the central region of the fuselage 52, and a tail wing 56 arranged at the end region of the fuselage 52.

The main wing 54 may have an inboard region and an outboard region. The tilting propulsion assemblies 58 with tilting rotors may be arranged in the front region of the left and right outboard areas. The tilting propulsion assemblies 58 may be fixed by the boom prepared at the outboard area of the main wing. The non-tilting propulsion assemblies 60 and 64, arranged horizontally relative to the fuselage 52, may be located in the front and rear areas of the rod extended from the right and left inboard region, and they may be referred to as lift propulsion assemblies.

In some examples, the outboard area of the main wing 54 may be partitioned from the horizontal surface 54a of the inboard area and have the lift surface 54b, and the tilting propulsion assemblies 58 may be mounted on the boom protruding from the lift surface. The lift surface 54b may have a winglet bent at the end of the wing. In one example, the tilting propulsion assemblies 58 and the lift surface 54b may be configured to rotate or move together. In some examples, where the lift surface 54b may be structurally separated from the boom like another example different from Figs 3 to 5, the tilting propulsion assemblies 58 may move or rotate together with the lift surface except for a part of the lift surface including the fuselage 32. In yet another example, only the hub and blades of the tilting propulsion assemblies 58 may be operated to move or rotate.

According to the details described above, when the flight mode is a hovering mode, the tilting propulsion assemblies 58 may be tilted to be substantially parallel to the blade arrangement direction of the non-tilting propulsion assemblies 60 and 64, as shown in FIGS. 3 and 4. When the flight mode is a cruising mode such as the horizontal flight, the tilting propulsion assemblies 58 may be tilted at a certain angle relative to the blade arrangement direction of the non-tilting propulsion assemblies 60 and 64, as shown in FIG. 5.

In some implementations, the air mobility apparatus 50 may include a gear 66 that is retractable or non-retractable for landing on land and/or water. The gear 66 may be located on both the front and rear of the air mobility apparatus 30, and it may include components such as wheels, treads, pontoons, or other components that help the air mobility apparatus land on land and/or water. Additionally, the air mobility apparatus 50 may have a stepper 68 that can be extended from the fuselage 52 for boarding and alighting, and side doors.

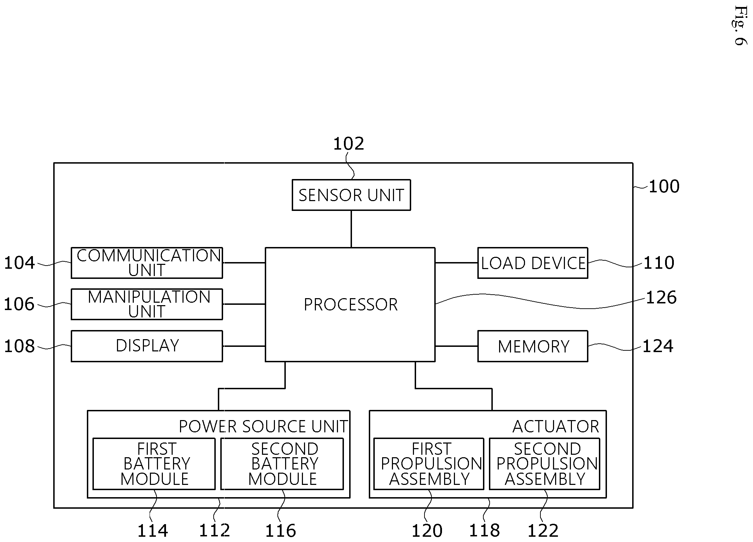

FIG. 6 is a schematic diagram showing a module constituting the air mobility apparatus. Hereinafter, a VTOL air mobility apparatus having a motor propulsion assembly shown in FIGS. 2 to 5 will be mainly described, but the present disclosure may also be applied to other types of air mobility apparatuses as long as a mechanical structure, function, module, and device of the air mobility apparatus described in the present disclosure may be technically joined. In addition, since some descriptions of functional modules of FIG. 6 are substantially the same as those of FIG. 1, the same content will be described briefly.

An air mobility apparatus 100 may include a sensor unit 102, a communication unit 104, a manipulation unit 106, a display 108, a load device 110, a power source unit 112, an actuator 118, a memory 124, and a processor 126.

The sensor unit 102 may have any type of detector for detecting any state or situation occurring in external and internal environments of the air mobility apparatus 100. The sensor unit 102 may acquire and provide sensor data used for flight control, state data on detected states of modules constituting the air mobility apparatus 100, situation data on detected situations of passengers and/or loads, and the like to the processor 126 that triggers a predetermined function and operation.

For example, the sensor unit 102 may include a voltage/current sensor, a temperature sensor, an environment sensor, a resistance sensor, a positioning sensor, and a state recognition sensor.

The voltage/current sensor may detect, for example, an electrical state of at least one of a battery module of the power source unit 112, and a motor and inverter of propulsion assemblies 120 and 122. The processor 126 may detect a flight mode, a flight control state, a battery control state, a motor control state, an inverter control state, and a failure/abnormality of these modules based on data detected from the voltage/current sensor, for example, the electrical states and changes of the battery, the motor, and the inverter.

The temperature sensor may detect a temperature of at least one of the battery module of the power source unit 112, the motor and inverter of the propulsion assemblies 120 and 122, and a cooling system for controlling temperatures of the propulsion assemblies 120 and 122. The environmental sensor may detect an external environment by having, for example, a camera, a radio detection and ranging (radar) sensor, a light detection and ranging (LiDAR) sensor, or the like. The resistance sensor may detect operating resistance of at least one of the battery module of the power source unit 112 and the motor and inverter of the propulsion assemblies 120 and 122. The processor 126 may detect the flight mode, the flight control state, the control states of the modules, and the failure/abnormality of the modules based on resistance data of the battery, the motor, and the inverter detected by the temperature sensor and/or the resistance sensor.

The positioning sensor is a module for identifying a position of the air mobility apparatus 100 and may be configured as, for example, a Global Positioning System (GPS) sensor or a global navigation satellite system (GNSS) sensor.

The state recognition sensor may detect a motion according to the operation of the aircraft, a load applied to the actuator 118, and an altitude of the aircraft. The state recognition sensor may detect a three-axis state of a fuselage 32, for example, yaw, pitch, and roll, and output a motion state of the aircraft based on the above-described parameters. The state recognition sensor may be configured as, for example, an inertial measurement unit (IMU) sensor, a gyro sensor, or the like. In addition, the state recognition sensor may have an altimeter and detect a change in altitude of the aircraft. In addition, the state recognition sensor may have, for example, a load detection sensor for measuring an aircraft load applied to at least one of the propulsion assemblies 120 and 122, a main wing and a tail wing. The load detection sensor may be provided on a specific part of the fuselage. The aircraft load may be a force or pressure applied to at least one of the actuator 118, the wings, and the fuselage 32 by the surrounding airflow during the flight.

The above-described data of the sensor unit 102 is merely exemplary and may additionally include sensor data on various detected situations not listed herein.

The manipulation unit 106 may be configured as a module for receiving a pilot's flight control input. For example, the manipulation unit 106 may have at least one inceptor in the fuselage. In addition to hardware devices, the manipulation unit 106 may further include a user interface such as a soft key. The user interface may be implemented in, for example, a graphical user interface of the display 108. The display 108 may output and display a posture state, control state, route information, information on remaining energy, and the surrounding environment image acquired from the environmental sensor of the air mobility apparatus 100 by the processor 126. In the present disclosure, the manipulation unit 106 for manual control is provided, but autonomous flight may be executed upon the pilot's request.

The power source unit 112 may generate and supply power and electric power used for the propulsion assemblies 120 and 122 and the load device 110. For instance, referring to FIG. 6, the power source unit 112 may be configured to have a plurality of battery modules.

First and second battery modules 114 and 116 may be battery units having the same or different characteristics. For example, in the case of different characteristics, the first battery module 114 may be a high output battery module, and the second battery module 116 may be a high energy battery module. The high output battery module may have a higher discharge characteristic value than the high energy battery module. The high energy battery module may be a secondary battery having a higher energy capacity than the high output battery module but lower instantaneous output characteristics than the high-power battery module. A plurality of battery modules having different characteristics are not limited to the above-described example and may be composed of any combination of batteries. As another example, the first and second battery modules 114 and 116 may be configured to have the same or different secondary batteries. In addition, the first battery module 114 may be a battery unit having a self-generation capability, and the second battery module 116 may be a secondary battery. Although FIG. 6 shows that the power source unit 112 includes two battery modules, the power source unit 112 may be configured to have three or more battery modules. The actuator 118 may include a plurality of propulsion assemblies 120 and 122 and may also be referred to as an actuating unit. The plurality of propulsion assemblies 120 and 122 may be components corresponding to the driving unit 22 of FIG. 1 in the air mobility apparatus 100.

The propulsion assemblies 120 and 122 may include a propeller having a plurality of blades, a hub, a motor, an inverter, a propulsion cooling module, and the like. As shown in FIGS. 2 and 3, in the present disclosure, the air mobility apparatus 100 may have a tilting rotor type. In the case of the tilting rotor, at least one of the plurality of propulsion assemblies 120 and 122 may tilt. As shown in FIGS. 2 and 3, a first propulsion assembly 120 may be configured as a tiltable rotor, and a second propulsion assembly 122 may be configured as a fixed rotor. Here, the fixed rotor may be a rotor having the blade arrangement fixed without tilting during flight. The first propulsion assembly 120 may be installed on the main wing and the tail wing and hinge-joined to a boom extending from the wing. The first propulsion assembly 120 has a nacelle that accommodates at least a motor for supplying power to the propeller, and the nacelle may tilt with respect to the boom. The position and tilting structure of the first propulsion assembly 120 are not limited to the implementation of FIGS. 2 and 3, and the first propulsion assembly may be configured in various ways. The first propulsion assembly 120 may be driven in a hovering mode, a cruising mode, and a transition section between these modes. In the hovering mode, the first propulsion assembly 120 may be operated to have the blade arrangement shown in FIG. 2 or FIG. 3, and in the cruising mode, the first propulsion assembly 120 may be operated to have the same arrangement as blades of the second propulsion assembly 122 shown in FIG. 2 or FIG. 5. The second propulsion assembly 122 is a lift rotor and may be fixedly installed on a boom extending from the main wing. The position and tilting structure of the second propulsion assembly 122 are not limited to the implementations of FIGS. 2 to 5, and the second propulsion assembly may be configured in various ways. The second propulsion assembly 122 is mainly used in the hovering mode, but may be driven depending on a flight situation caused by horizontal flight. In the present disclosure, the first propulsion assembly 120 and the second propulsion assembly 122 may each be a single propulsion assembly or may be referred to as a propulsion assembly set. For example, a first propulsion assembly set including a plurality of tilting rotors may be simply called the first propulsion assembly 120, and a second propulsion assembly set including a plurality of fixed rotors may be simply called the second propulsion assembly 122.

The tilting rotor type may be a type in which all of the plurality of propulsion assemblies function as tilting rotors as a different example from FIGS. 2 and 3. The implementations of the present disclosure may be applied to both a lift-and-cruise type and a multi-copter type.

In some examples, the power source unit 112 may have a single module energy source for the first and second propulsion assemblies 120 and 122, and as another example, the power source unit 112 may include a plurality of module energy sources for stability, redundancy, and stable thrust of energy supply to the first and second propulsion assemblies 120 and 122. In addition, the plurality of propulsion assemblies 120 and 122 may be electrically connected to at least one of the plurality of energy sources for the above purpose. For example, the plurality of battery modules 114 and 116 and the plurality of propulsion assemblies 120 and 122 may be electrically coupled in a circulation manner. Specifically, the first propulsion assembly 120 may receive power from the first and second battery modules 114 and 116, and the second propulsion assembly 122 may receive power from the second battery module 116 and other battery modules. As another example, the first battery module 114 and the second battery module 116 may function as a main energy source and an auxiliary energy source, respectively. The main energy source may supply power to the first and second propulsion assemblies 120 and 122 regardless of the flight mode. In a flight mode with high power consumption, such as a hovering mode, the auxiliary energy source may be used together with the main energy source to supplement power to at least one of the propulsion assemblies 120 and 122. In the cruising mode, the main energy source may charge the auxiliary energy source based on a charge state of the auxiliary energy source, the remaining amount of the main energy source, and a flight state.

Referring back to FIG. 6, the memory 124 may store applications and various pieces of data for flight control of the air mobility apparatus 100 and load the applications or read and write the data at the request of the processor 126. In the present disclosure, the data may include, for example, sensor data, state data of the air mobility apparatus, flight control parameters, and the like. In addition, the applications and data may store and manage the data and software described in FIG. 1 in addition to the above-described items.

Regarding the present disclosure, the processor 126 may process flight control, route control, power/energy control through the powertrain, autonomous movement control, and the like using the applications, instructions, and data stored in the memory 124.

The processor 126 may be configured as a single processing unit or may include a plurality of processing units for performing distributed processing. The plurality of processing units may include an air processing system (APS), a flight control unit (FCC), a power control unit (PCU), a battery controller, a thermal management system (TMS), a fuel processing system (FPS), and the like, but are not limited thereto.

In some examples, even when the operations according to the present disclosure are subject to distributed processing by a plurality of systems or controllers, for convenience of description, the systems and controllers may be collectively referred to as the processor 126. The processor 126 processing functions, operations, and processes according to the implementations of the present disclosure will be described.

In some examples, in the present disclosure, the VTOL type air mobility apparatus 100 is mainly described. However, when other types of mobility apparatuses, such as a vehicle, a ground mobility device, a robot, and a drone, include a similar configuration to the present disclosure, the technical ideas according to examples and implementations according to the present disclosure may be applied to other types of mobility apparatuses.

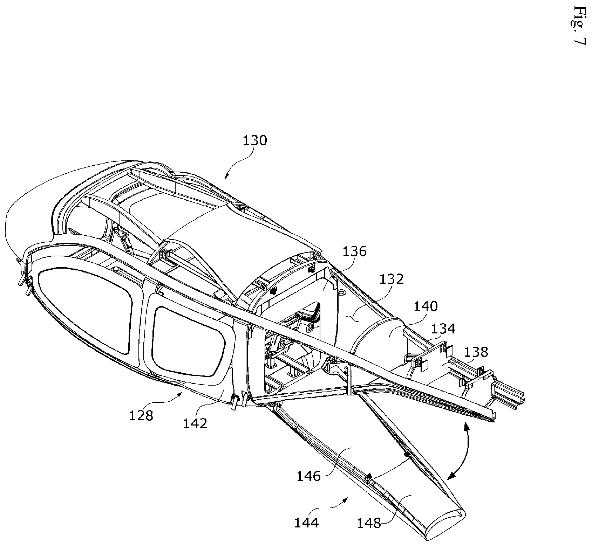

Hereinafter, an air mobility apparatus having a door according to the present disclosure will be described with reference to FIGS. 7 to 15. FIG. 7 is a view showing a door of the air mobility apparatus. As described above, an aircraft may be used interchangeably with an air mobility apparatus.

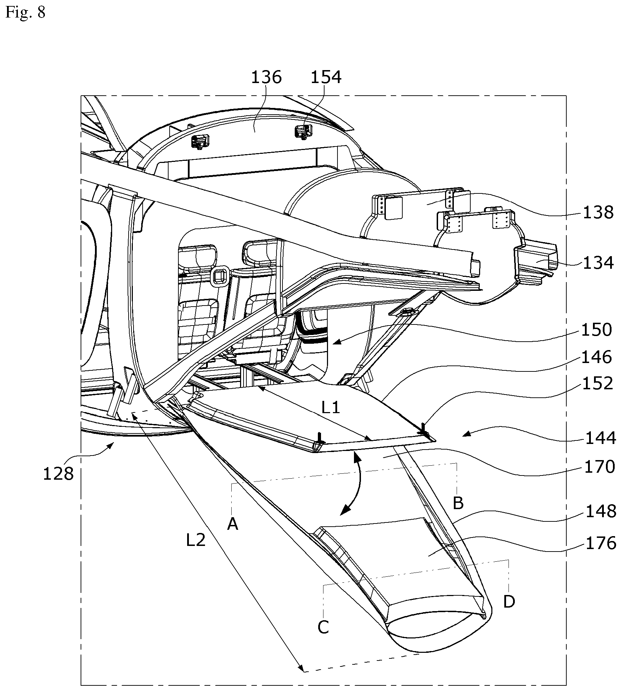

The air mobility apparatus 100 may have the fuselage 128 corresponding to a mobility body that loads passengers and baggage. Specifically, the air mobility apparatus 100 may include the fuselage 128 having a first space area 130 and a second space area 132. The first space area 130 and the second space area 132 may be referred to as the first cabin 130 and the second cabin 132, respectively, from the aircraft perspective. For convenience of description, the first and second space areas 130 and 132 may be described as the first and second cabins 130 and 132. The first cabin 130 may be provided as a space for accommodating a pilot and passengers, and the second cabin 132 may be used as a space for loading baggage and may be an area in which passengers cannot board. That is, the first cabin 130 and the second cabin 132 may correspond to a passenger cabin and a cargo cabin, respectively. The first cabin 130 may have, for example, a control module, a pilot seat, and a passenger seat. The passenger seat may be arranged behind the pilot seat and installed in at least one row in a longitudinal direction of the fuselage 128. The seat may slide in the longitudinal direction of the fuselage 128 for the convenience of boarding. As exemplarily shown in FIGS. 8 to 10, a seat 162 may have a post for sliding, and a sliding rail may be installed on a bottom surface of the first cabin 130. The seat may be slid by the post and the rail.

The fuselage 128 may be formed to have a space separated from the outside by a frame 134, partition wall portions 136, 138, and 140, a skin 142, a window, and a door part. The frame 134 may be arranged in a first direction of the fuselage 128. The frame 134 may have a shape that matches the design structure and shape of the aircraft. For example, the first direction is the longitudinal direction of the fuselage 128, and the frame 134 may be a longeron. The partition wall portions 136, 138, and 140 may be disposed in a second direction of the fuselage 128 to support the frame 134. For example, the second direction is a transverse direction of the fuselage 128, and a plurality of partition wall portions 136, 138, and 140 may be arranged in an extension direction of the frame 134. The partition wall portions 136, 138, and 140 may be plate-shaped and may be referred to as bulkheads. The skin 142 may be disposed to cover the frame 134 and the partition wall portions 136, 138, and 140 to function as an outer surface of the fuselage 128. The skin 142 may have an area in which a window made of a transparent material is installed so that the pilot and passengers may see the outside. The window may be provided on side skins corresponding to a fuselage side wall 142. The window may be formed in a form that is opened and closed so that external and internal air enters and exits or is sealed as another example. Here, the fuselage side wall and the skin may be described interchangeably.

The door part may include side doors disposed at the sides of the fuselage 128 and a rear door 144 disposed at the rear of the fuselage 128. The implementation of the present disclosure relates to the rear door, and for convenience of description, the rear door 144 may be referred to as a door. The side door may be opened and closed between the first cabin 130 and an external space. Passengers and a pilot may enter and exit between the first cabin 130 and the external space through the side doors. The side door may be, for example, hinge-joined and may be opened and closed by rotating about the hinge shaft. As another example, the side door may be opened and closed in a sliding form. The opening and closing method of the side door is not limited to the above-described example and may be designed in various ways.

The rear door 144 may have a plurality of sub-doors to be opened and closed between the second cabin 132 and another space. The other space may be the first cabin 130 or the external space. Passengers or the like may open and close the rear door 144 to load baggage. In addition, passengers may enter or exit the second cabin 132 through the rear door 144 before loading baggage. A detailed structure of the rear door 144 will be described below.

The first cabin 130 may be partitioned from the second cabin 132 by the fuselage side wall 142, the window, the side doors, the frame 134, and the partition wall portions 136, 138, and 140. The partition wall partitioning the first cabin 130 and the second cabin 132 may be a front partition portion 136. The front partition portion 136 may be formed of a single member or may be formed of a combination of a plurality of members. A detailed structure of the front partition portion 136 having the plurality of members will be described below. The second cabin 132 may be partitioned from the first cabin 130 and the external space by the fuselage side wall 142, the rear door 144, the frame, and the partition wall portions 136, 138, and 140. The partition wall partitioning the second cabin 132 and the external space may be a rear partition portion 138. In the present disclosure, the rear partition portion 138 may be referred to as a rear bulkhead. In addition, the second cabin 132 may include an additional partition portion 140 between the front partition portion 136 and the rear partition portion 138 for the lateral stiffness of the fuselage 128. The additional partition portion 140 may also be a bulkhead similar to the rear partition portion 138 and may support the frame.

Describing the rear door 144 in detail, the rear door 144 may have an inner door 146 that partitions the first cabin 130 and the second cabin 132, and an outer door 148 that partitions the second cabin 132 and the external space. As shown in FIG. 8, the inner door 146 and the outer door 148 may be opened and closed independently. FIG. 8 is a view showing the inner door and the outer door. The inner door 146 and the outer door 148 may be opened and closed by being manually manipulated. As another example, the inner door 146 and the outer door 148 may be automatically opened and closed by the pilot manipulating a module that directs or controls the opening and closing operation of the doors.

As an example, the inner door 146 may be formed to be smaller than the outer door 148 in the longitudinal direction of the fuselage 128. The longitudinal direction of the fuselage 128 may be the first direction of the fuselage 128 corresponding to the above-described longitudinal direction. For the space efficiency of the second cabin 132, the outer door 148 may be formed to form substantially the entire bottom surface of the second cabin 132. An opening 150 of the front partition portion 136, which will be described below, may be positioned between the first cabin 130 and the second cabin 132. To implement a streamlined shape of the fuselage 128, a height of the front partition portion 136 may be smaller than a length of the second cabin 132 in the first direction. Since a size of the opening 150 is determined by the front partition portion 136, the height of the opening 150 may be smaller than the length of the second cabin 132 in the first direction. Therefore, the inner door 146 that closes the opening 150 may be designed to be smaller than the outer door 148 in the first direction of the fuselage 128. The horizontal length L1 of the inner door in a longitudinal direction of the fuselage is less than a horizontal length L2 of the outer door in the longitudinal direction.

As another example, the inner door 146 may have substantially the same size as the outer door 148 in the first direction of the fuselage 128. In the present disclosure, the rear door 144 having the inner door 146 smaller in size than the outer door 148 will be mainly described.

In addition, the inner door 146 may be formed to have a larger size than the opening 150, for example, while covering the entire opening 150 of the front partition portion 136. Alternatively, the inner door 146 may be formed to have a size corresponding to a portion of the opening 150. In this case, the inner door 146 may be formed in a form in which the baggage loaded in the second cabin 132 does not move to the first cabin 130 during the flight. The inner door 146 may be made of a metal or resin material, but is not limited thereto, and may be made of any material.

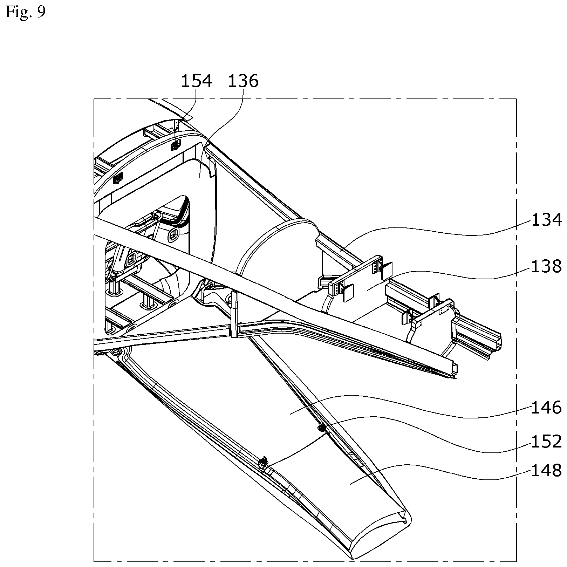

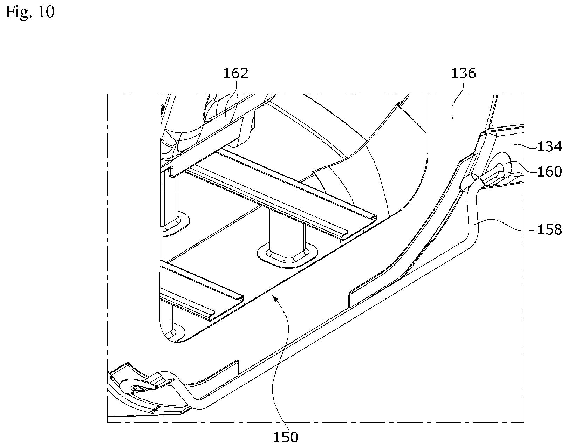

The inner door 146 and the outer door 148 may have any hinge structure to be opened and closed independently. Referring to FIGS. 8 to 10 showing independent opening and closing operations, the inner door 146 and the outer door 148 may be arranged to have the same hinge shaft 158. As shown in FIG. 10, the hinge shaft 158 may be formed as a coaxial hinge shaft. FIG. 9 is a view showing the inner door overlapping the outer door. FIG. 10 is a view showing a hinge shaft.

The hinge shaft may be joined to a predetermined structure provided in the second cabin 132. For example, the predetermined structure may be the frame 134 disposed at both sides of the rear door 144. Specifically, the hinge shaft 158 may be joined to the frame 134 disposed at both sides of the inner door 146. The frame 134 may be a longeron. To increase the transverse stiffness of the fuselage 128, the hinge shaft 158 may be joined to the frame 134 through a medium structure 160. The medium structure 160 may be a bracket, and the joining structure of the hinge shaft may be implemented by joining the longeron with the bracket using a joint.

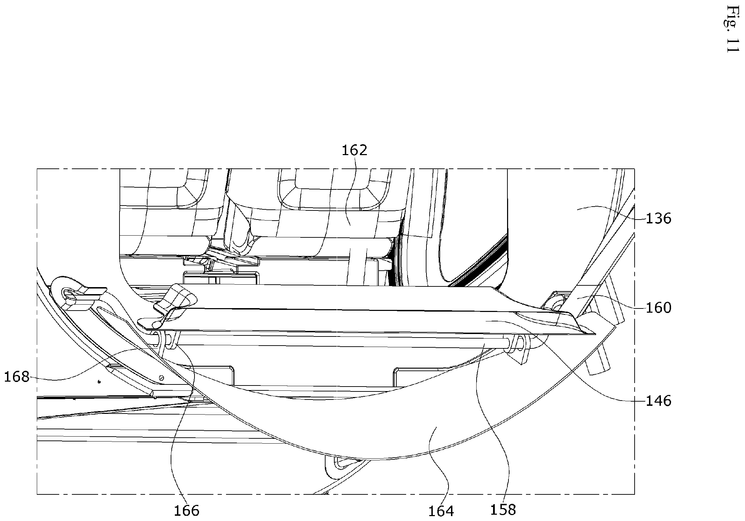

For the independent opening and closing operations, the inner door 146 and the outer door 148 may each be hinge-joined at a different position of the hinge shaft 158. As shown in FIG. 11, the inner door 146 may have an inner hinge-joining portion 166 at one end thereof. The inner hinge-joining portion 166 may be disposed at the bottom of a panel of the inner door 146 and may have a hole through which the hinge shaft 158 passes. The outer door 148 may have an outer hinge-joining portion 168 at one end thereof. The outer hinge-joining portion 168 may be disposed at the top of the plurality of panels forming the outer door 148 and may have a hole through which the hinge shaft 158 passes. The inner hinge-joining portion 166 may be disposed inward from the outer hinge-joining portion 168 with respect to the center of the hinge shaft 158. A position of the inner hinge-joining portion 166 in the inner door 146, a position of the outer hinge-joining portion 168 in the outer door 148, and the relative arrangement of the joining portions 166 and 168 are not limited to the example of FIG. 11 and may be modified in various ways.

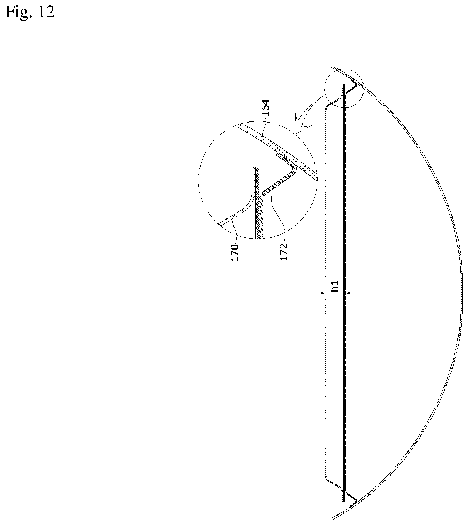

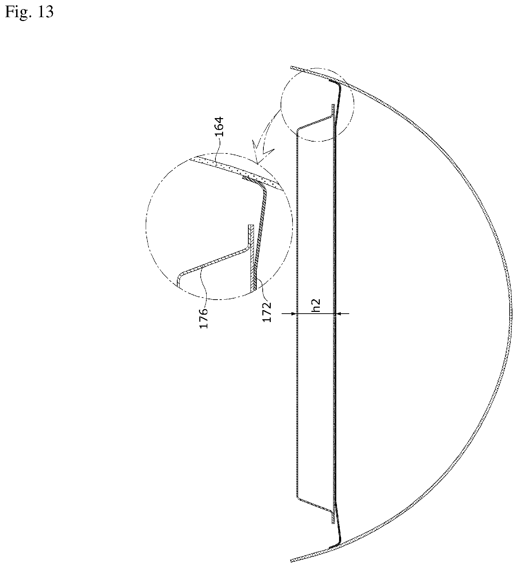

FIG. 12 is a view showing a cross-section of a first interior panel of the outer door. FIG. 13 is a view showing a cross-section of a second interior panel of the outer door.

As shown in FIGS. 8, 12, and 13, the outer door 148 may include a first interior panel 170 of the outer door disposed to correspond to the inner door 146, and a second interior panel 176 of the outer door disposed adjacent to the first inner panel 170 of the outer door. In addition, the outer door 148 may have an exterior panel 164 of the outer door arranged along the first and second interior panels 170 and 176 of the outer door. The first and second interior panels 170 and 176 of the outer door may be disposed on the exterior panel 164 of the outer door through a reinforcing member 172. As another example, a support plate may be positioned between the second inner panel 176 of the outer door and the reinforcing member 172 to provide support and structural rigidity. The reinforcing member 172 may be coupled to the outer panel 164 of the outer door, and the support plate may be spaced apart from the outer panel 164 of the outer door and coupled to the second inner panel 176 of the outer door and the reinforcing member 172, respectively. The exterior panel 164 of the outer door may be formed to have a continuous outline with the nearby fuselage skin 142. Since the fuselage skin 142 has a streamlined shape, the exterior panel 164 of the outer door may be formed to have a streamlined shape having the continuous outline with the skin 142. Therefore, the formation of the exterior and prevention of aerodynamic obstruction can be realized, and the closing structure of the rear door protecting the interior can be implemented.

As shown in FIGS. 11 and 12, the first and second interior panels 170 and 176 of the outer door may be provided flat for the convenience of passenger movement, the ease of loading of baggage, and the securing of a loading space. Therefore, the exterior panel 164 of the outer door having a curved cross section may be installed to be spaced apart from the first and second interior panels 170 and 176 of the outer door. The exterior panel 164 of the outer door and the interior panels 170 and 176 of the outer door may be supported by the reinforcing member between these panels for stiffness.

As shown in FIG. 8, when the inner door 146 is open, the inner door 146 may be formed to overlap the first interior panel 170 of the outer door. The inner door 146 may be provided to have substantially the same shape and size as the first interior panel 170 of the outer door. As another example, the inner door 146 may be provided to have a shape having a smaller size than the first interior panel 170 of the outer door.

The first interior panel 170 of the outer door may be provided to have a different level (e.g., thickness, height) from the second interior panel 176 of the outer door. As shown in FIGS. 8, 11, and 12, for smooth overlapping of the inner door 146 and the first interior panel 170 of the outer door, the first interior panel 170 of the outer door may be provided to have a lower level than the second interior panel 176 of the outer door. As can be seen in FIGS. 11 and 12, an end height hl of the first interior panel 170 of the outer door may be smaller than an end height h2 of the second interior panel 176 of the outer door.

For example, a thickness or height difference (h2-h1) between the end heights may be substantially equal to an end height of the inner door 146. Therefore, when the inner door 146 is open, the adjacent ends of the inner door 146 and the second interior panel 176 of the outer door may be provided to have at least the same level. For example, the second interior panel 176 of the outer door 148 may be configured to be flush with the adjacent ends of the inner door 146 when the inner door 146 is opened. In addition, an outer surface of the second interior panel 176 of the outer door and an outer surface of the inner door 146 may be formed flat. Since the panels are designed with the above-described heights and shapes, a step is not formed between the open inner door 146 and the second interior panel of the outer door, thereby enabling passengers and baggage to move smoothly.

As another example, the difference (h2-h1) between the end heights may differ from the end height of the inner door 146. When the above difference (h2-h1) is smaller than the end height of the inner door 146, the open inner door 146 may have a step with respect to the second interior panel 176 of the outer door. When the inner door 146 is open, these panels may be connected in a staircase shape.

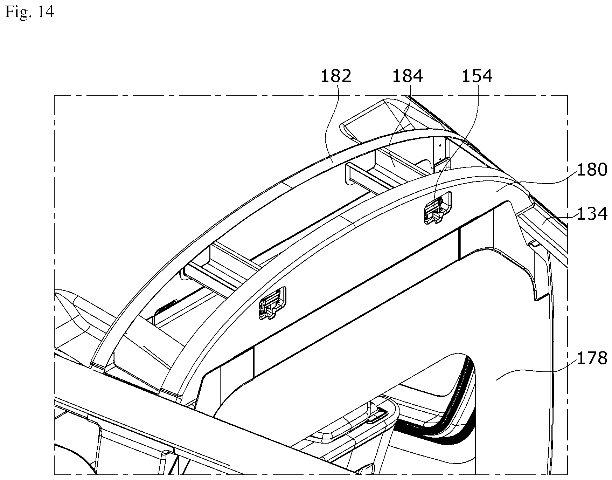

The joining structure between the inner door 146 and the front partition portion 136 and the joining structure between the outer door 148 and the rear partition portion 138 will be described with reference to FIGS. 8 and 14. FIG. 14 is a view showing a joining structure of the inner door and a front partition portion.

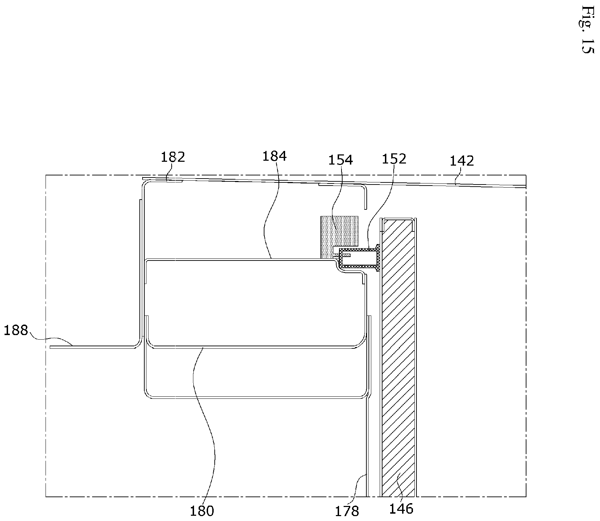

The front partition portion 136 may be disposed between one sides of the first cabin 130 and the second cabin 132 and may have the opening 150 opened and closed by the inner door 146. As shown in FIGS. 14 and 15, the front partition portion 136 may specifically include a partition panel 178, a first front bulkhead 180, a second front bulkhead 182, and a support 184. The second front bulkhead 182 may be joined to a wing spar cover 188 so that a load of the second front bulkhead 182 may be distributed to the frame 134 and the wing spar cover 188. FIG. 15 is a view showing a cross section related to the joining of the inner door and the front partition portion.

The partition panel 178 may have the opening 150 and have a surface facing the inner door 146 closed at one side thereof. The first front bulkhead 180 may be disposed at the other side of the partition panel, and the second front bulkhead 182 may be arranged to face the first front bulkhead 180. The support 184 may be disposed to be interposed between the first front bulkhead 180 and the second front bulkhead 182.

The inner door 146 may have a stopper 152 (or a striker) at an upper end portion facing the front partition portion 136. The first front bulkhead 180 may have a locking part 154 in an area positioned higher than the partition panel 178 to be joined with the striker of the inner door being closed. In the present disclosure, the locking part may be supported by a latch. Here, the locking part 154 may be on the support 184. When the locking part 154 is attached to only a side surface of the first front bulkhead 180, a fastening load between the stopper 152 and the locking part 154 of the inner door 146 is concentrated on only the first front bulkhead 180, and thus the inner door 146 may not be firmly locked. Since the locking part 154 is seated on the support 184 fixed between the first and second front bulkheads 180 and 182, the fastening load between the stopper 152 and the locking part 154 may be distributed to the first and second front bulkheads 180 and 182 and the support 184. In addition, the longitudinal stiffness of the first and second front bulkheads 180 and 182 can be reinforced by the support 184. Although FIGS. 14 and 15 show specific types of the stopper 152 and the locking part 154, the stopper 152 and the locking part 154 are not limited thereto and may be modified into any type.

Referring to FIG. 8, the rear partition portion 138 may be disposed at the other side of the second cabin and may be, for example, formed as a rear bulkhead. When the outer door 148 is closed, an end portion of the outer door 148 may face the rear bulkhead. The stopper described with reference to the inner door 146 may be installed on one of the end portion of the outer door 148 or an end portion of the rear bulkhead. In this case, the locking part described with reference to the inner door 146 may be installed on the other of the end portions. By being mounted with the striker functioning as the stopper, door closing fixing strength can be secured. In addition, when the striker functioning as the stopper is mounted on the rear bulkhead, the lateral stiffness of the fuselage can be reinforced, and the fastening load between the stopper and the locking part can be distributed.

Referring back to FIGS. 7 to 9, an operation of the rear door 144 will be described.

Passengers may board or alight from the first cabin 130 using the side doors and the rear door 144. The operation of the rear door 144, for example, boarding and loading of baggage through the rear door 144, will be described. The outer door 148 may be opened for passengers to board the first cabin 130. The inner door 146 that closes the opening 150 of the front partition portion 136 may be opened to overlap the first interior panel 170 of the outer door while being rotated by a hinge operation. Since the inner door 146 and the outer door 148 may be connected to function as a stepper, passengers may enter the first cabin 130 while moving on these doors.

When passengers board the first cabin 130, the inner door 146 may close the opening 150 of the front partition portion 136 while rotating. Thereafter, baggage may be disposed on the first and second interior panels 170 and 176 of the outer door. When the outer door 148 in which the baggage is disposed is closed, the baggage may be loaded into the closed space of the second cabin 132 formed by the outer door 148, the inner door 146, the rear partition portion 138, and the fuselage side wall 142. The baggage is prevented from moving to the first cabin 130 by the inner door 146 during the flight, and the aircraft can fly with the baggage stably loaded into the second cabin 132.

The rear door according to the present implementation is described as being implemented in the tilting rotor type aircraft, but may also be applied to any type of AAM, such as a lift and cruise or multi-copter type AAM. In addition, the rear door of the present implementation may also be used in a typical rotary wing aircraft or fixed wing aircraft. In addition, the rear door of the present implementation may also be applied to a mobility apparatus such as a ground or sea vehicle as long as there is no technical conflict.

According to the present disclosure, it is possible to provide an aircraft and a mobility apparatus that prevent the movement of baggage to a passenger cabin and ensure the ease of loading and unloading and the convenience of boarding and alighting.

The effects obtainable from the present disclosure are not limited to the above-described effects, and other effects that are not described will be able to be clearly understood by those skilled in the art to which the present disclosure pertains from the following description.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some of the steps.

The various implementations of the present disclosure are not a list of all possible combinations and are intended to describe representative aspects of the present disclosure, and the matters described in the various implementations may be applied independently or in combination of two or more.

In addition, various implementations of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

## Claims

1. An air mobility apparatus comprising:
a fuselage having a first cabin and a second cabin; and
a rear door comprising (i) an inner door configured to partition the first cabin and the second cabin from each other and (ii) an outer door configured to partition the second cabin and an external space of the fuselage from each other,
wherein the inner door and the outer door are configured to be independently opened and closed.

2. The air mobility apparatus of claim 1, wherein a horizontal length of the inner door in a longitudinal direction of the fuselage is less than a horizontal length of the outer door in the longitudinal direction.

3. The air mobility apparatus of claim 1, wherein the outer door comprises a first interior panel and a second interior panel that have different heights from each other.

4. The air mobility apparatus of claim 3, wherein the height of the first interior panel of the outer door is less than the height of the second interior panel of the outer door.

5. The air mobility apparatus of claim 4, wherein the inner door is configured to, based on the inner door being open, overlap the first interior panel of the outer door.

6. The air mobility apparatus of claim 5, wherein the second interior panel of the outer door is configured to, based on the inner door being open, be flush with adjacent end portions of the inner door.

7. The air mobility apparatus of claim 3, wherein the outer door further comprises an exterior panel that is arranged along the first and second interior panels of the outer door and defines a continuous outline with a surface of the fuselage, and
wherein an outer surface of the second interior panel of the outer door and an outer surface of the inner door are flat.

8. The air mobility apparatus of claim 1, further comprising a hinge shaft that rotatably connects the inner door and the outer door to the fuselage,
wherein the inner door and the outer door are configured to rotate about the hinge shaft.

9. The air mobility apparatus of claim 8, wherein the hinge shaft is joined to a predetermined structure provided at the second cabin.

10. The air mobility apparatus of claim 8, further comprising a frame disposed at sides of the inner door, wherein the hinge shaft is joined to the frame.

11. The air mobility apparatus of claim 10, further comprising a medium structure that connects the hinge shaft to the frame.

12. The air mobility apparatus of claim 8, wherein the inner door and the outer door are hinge-joined to the hinge shaft at different positions of the hinge shaft.

13. The air mobility apparatus of claim 1, further comprising:
a front partition portion disposed between the first cabin and a first side of the second cabin, the front partition portion having an opening; and
a rear partition portion disposed at a second side of the second cabin,
wherein the inner door is configured to open and close the opening, and
wherein an end portion of the outer door is configured to face the rear partition portion based on the outer door being closed.

14. The air mobility apparatus of claim 13, wherein the inner door comprises a stopper disposed at an upper end portion facing the front partition portion,
wherein the front partition portion comprises:
a partition panel that defines the opening, the partition panel having a first side configured to face the inner door based on the inner door being closed; and
a first front bulkhead disposed at a second side of the partition panel, and
wherein the first front bulkhead comprises a locking part disposed in an area higher than the partition panel, the locking part being configured to be coupled to the stopper of the inner door based on the inner door being closed.

15. The air mobility apparatus of claim 14, wherein the front partition portion further comprises:
a second front bulkhead that faces the first front bulkhead; and
a support interposed between the first front bulkhead and the second front bulkhead, and
wherein the locking part is disposed at the support.

16. The air mobility apparatus of claim 1, wherein the first cabin is a passenger cabin, and the second cabin is a baggage cabin.

17. A mobility apparatus comprising:
a mobility body having a first space area and a second space area; and
a rear door comprising (i) an inner door configured to partition the first space area and the second space area from each other and (ii) an outer door configured to partition the second space area and an external space of the mobility body from each other,
wherein the inner door and the outer door are configured to be independently opened and closed.

18. The mobility apparatus of claim 17, wherein a horizontal length of the inner door in a longitudinal direction of the mobility body is less than a horizontal length of the outer door in the longitudinal direction.

19. The mobility apparatus of claim 17, wherein the outer door comprises a first interior panel and a second interior panel that have different heights from each other.

20. The mobility apparatus of claim 17, further comprising a hinge shaft that rotatably connects the inner door and the outer door to the mobility body,
wherein the inner door and the outer door are configured to rotate about the hinge shaft.
